# FASCICULE DE BREVET EUROPEEN

(11) **EP 0 890 775 B1**
(45) Date de publication et mention de la délivrance du brevet: **04.06.2003**
(21) Numéro de dépôt: 98470014.6
(22) Date de dépôt: 01.07.1998
(51) Int. Cl.: F16L 37/092

(54) **Dispositif de verrouillage pour un assemblage de deux éléments de canalisation, et assemblage d'éléments de canalisation en comportant application.**
Verriegelungsvorrichtung zum Verbinden von zwei Rohrleitungselementen und entsprechende Anwendung solcher Rohrverbindungsanordnung
Locking device for connecting pipe members and use of such a connection

(30) Priorité: 07.07.1997 FR 9708608
(43) Date de publication de la demande: 13.01.1999
(73) Titulaire: SAINT-GOBAIN PAM, 54000 Nancy (FR)
(72) Inventeur: Percebois, Alain, 54700 Blenod les Pont a Mousson (FR); Renard, Philippe, 54710 Fleville (FR); Ory, Jean-Paul, 54700 Blenod les Pont a Mousson (FR); Auproux, Daniel, 54570 Foug (FR)
(74) Mandataire: Puit, Thierry

(56) Documents cités:
- EP-A- 0 541 472
- DE-U- 9 311 500
- DE-U- 29 605 371
- US-A- 4 867 488

## Description

La présente invention concerne un dispositif de verrouillage pour l'assemblage d'un bout uni et d'un emboîtement de deux éléments de canalisation, dispositif du type comprenant une couronne de blocage qui comporte au moins un insert de blocage relié à une bague de frettage en élastomère ou analogue, cette couronne étant destinée à être logée, en attente, dans une chambre de verrouillage solidaire dudit emboîtement avant introduction du bout uni dans cette chambre, une partie de liaison de la bague s'étendant le long d'une surface d'extrémité de l'insert destinée à être orientée vers l'extrémité axialement extérieure de la chambre de verrouillage, l'insert étant destiné, lors de l'introduction du bout uni dans la chambre de verrouillage, à s'écarter radialement vers l'extérieur en déformant la bague de manière que celle-ci vienne se placer autour du bout uni, une surface radialement extérieure de la couronne étant destinée à prendre appui sur une surface de réaction inclinée de la chambre de verrouillage et l'insert présentant une surface radialement intérieure dont au moins un relief d'accrochage est destiné à prendre appui sur la surface radialement extérieure du bout uni pour verrouiller l'assemblage des deux éléments de canalisation.

De tels dispositifs sont utilisés pour le verrouillage de tuyaux de canalisation. Plusieurs inserts sont alors répartis régulièrement angulairement et sont reliés périphériquement par la bague de frettage. La chambre de verrouillage est réalisée dans l'emboîtement ou dans une contrebride de verrouillage fixée sur l'emboîtement.

Les inserts sont pourvus sur leur surface radialement intérieure de dents destinées à venir directement accrocher la surface extérieure du bout uni, pour empêcher, après assemblage de deux tuyaux, le retrait du bout uni hors de l'emboîtement correspondant. Dans un agencement connu (EP-A-0 235 818), une partie de liaison de la bague s'étend sur la face d'extrémité extérieure de chaque insert et relie la bague à un collier de retenue, extérieur à la chambre de verrouillage, destiné à prendre appui sur une surface d'appui arrière solidaire de l'emboîtement.

Ce collier de retenue permet de retenir axialement la couronne de blocage lors de l'introduction du bout uni dans la chambre de verrouillage, et ainsi de maintenir la couronne entre la surface radialement extérieure du bout uni et la surface de réaction de la chambre de verrouillage.

Lors de son introduction dans la chambre de verrouillage, l'extrémité du bout uni vient buter sur la face d'extrémité extérieure des inserts, entre le bord radialement intérieur de cette face et le bord radialement intérieur de la partie de liaison correspondante de la bague.

L'extrémité du bout uni pousse alors le bord radialement intérieur de la face d'extrémité extérieure de l'insert dans le sens axialement opposé à la force de retenue exercée par le collier sur l'insert, en créant ainsi un couple de force qui peut provoquer le basculement de l'insert, voire une désolidarisation de l'insert et de la bague.

Ce phénomène apparaît essentiellement dans le cas où le jeu entre l'emboîtement et le bout uni est faible, notamment lorsque les deux éléments de canalisation présentent des revêtements épais.

Ce basculement peut conduire à une position indésirable de l'insert, la surface munie de dents n'étant pas orientée vers la surface radialement extérieure du bout uni et ne pouvant donc pas remplir son rôle d'accrochage.

L'invention a pour but de résoudre le problème exposé ci-dessus en fournissant un dispositif de verrouillage qui permette, de manière simple et économique, d'éviter un mauvais positionnement, lors de la pénétration du bout uni dans la chambre de verrouillage, d'un insert de blocage de la couronne placée en attente dans la chambre de verrouillage.

A cet effet, l'invention a pour objet un dispositif de verrouillage du type précité, caractérisé en ce que ladite partie de liaison de la bague se prolonge radialement vers l'intérieur par un bourrelet d'abordage de l'extrémité du bout uni, ce bourrelet d'abordage dépassent radialement vers l'intérieur au-delà d'un bord radialement intérieur de ladite surface d'extrémité extérieure de l'insert.

Suivant des modes particuliers de réalisation, le dispositif peut comporter l'une ou plusieurs des caractéristiques suivantes :
- ledit bourrelet d'abordage dépasse radialement vers l'intérieur du bord radialement intérieur de la surface d'extrémité extérieure de l'insert d'une distance h qui est supérieure à 0,4 mm,
- ledit bourrelet d'abordage dépasse radialement vers l'intérieur du bord radialement intérieur de la surface d'extrémité extérieure de l'insert, d'une distance h qui est supérieure à 4% de la hauteur radiale moyenne de l'insert,
- ledit bourrelet d'abordage dépasse radialement vers l'intérieur du bord radialement intérieur de la surface d'extrémité extérieure de l'insert, d'une distance h qui est supérieure à 3% du déplacement radial moyen de la bague lorsqu'elle vient se placer autour du bout uni,
- ladite surface d'extrémité extérieure de l'insert se prolonge radialement vers l'intérieur par une zone de jonction arrondie et/ou chanfreinée,
- ledit bourrelet d'abordage de la bague recouvre au moins partiellement la zone de jonction,
- ledit bourrelet d'abordage de la bague est prolongé axialement vers l'intérieur le long d'au moins une partie de la surface radialement intérieure de l'insert,
- le dispositif comprend une partie de retenue axiale destinée à prendre appui sur une surface d'appui arrière solidaire de l'emboîtement, pour limiter les déplacements axiaux de la couronne lors de l'introduction du bout uni dans l'emboîtement,
- la couronne de blocage comprend une partie formant une garniture d'étanchéité pour assurer l'étanchéité entre les deux éléments de canalisation assemblés, et
- ledit corps d'étanchéité est destiné à venir en appui au moins partiellement contre une collerette radialement intérieure de l'emboîtement.

L'invention a également pour objet un assemblage d'éléments de canalisation, notamment des tuyaux, comprenant un bout uni d'un premier élément de canalisation introduit dans un emboîtement d'un second élément de canalisation, le second élément de canalisation comprenant également une chambre de verrouillage solidaire de l'emboîtement, ladite chambre étant ménagée dans l'emboîtement ou dans une contrebride fixée sur celui-ci, caractérisé en ce qu'il comprend un dispositif de verrouillage comme décrit ci-dessus dont la couronne de blocage est logée dans ladite chambre, une surface radialement extérieure de la couronne prenant appui sur une surface de réaction inclinée de la chambre de verrouillage, et la surface radialement intérieure de l'insert prenant appui sur la surface radialement extérieure du bout uni en verrouillant l'assemblage des deux éléments de canalisation.

Dans un mode de réalisation, l'assemblage comprend une garniture d'étanchéité à compression radiale interposée entre le bout uni et l'emboîtement.

L'invention sera mieux comprise à la lecture de la description qui va suivre, donnée uniquement à titre d'exemple, et faite en se référant aux dessins annexés sur lesquels :
- la figure 1 est une demi-vue en coupe longitudinale, avant assemblage, d'un bout uni d'un premier tuyau de canalisation et d'un emboîtement d'un deuxième tuyau de canalisation muni d'un dispositif de verrouillage selon l'invention, cette vue étant prise dans un plan diamétral passant par un insert de blocage du dispositif de verrouillage,
- la figure 2 est une vue agrandie de la zone cerclée II de la figure 1,
- la figure 3 est une vue analogue à la vue de la figure 2, illustrant une variante du mode de réalisation de la figure 1,
- les figures 4 et 5 sont des vues analogues à la figure 2 illustrant respectivement un deuxième mode de réalisation de l'invention et une de ses variantes, et
- la figure 6 est une vue analogue à la figure 1 illustrant un troisième mode de réalisation de l'invention après assemblage des deux éléments de canalisation.

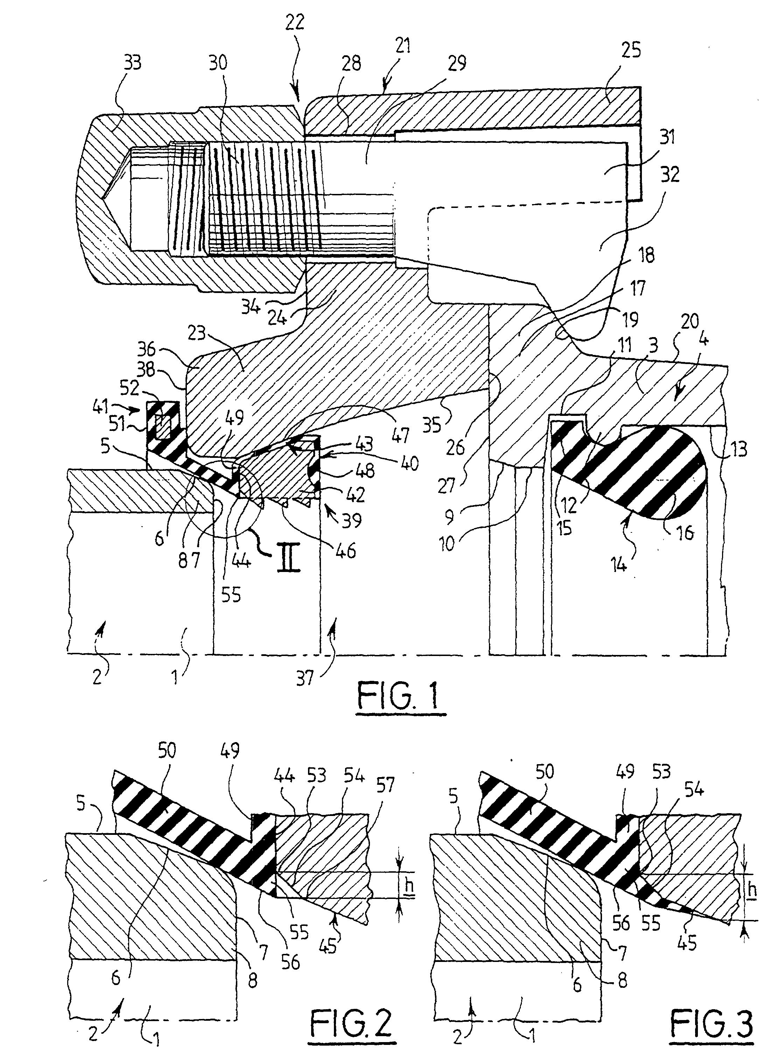

On a représenté sur la figure 1 un bout uni 1, ou bout mâle, d'un premier tuyau de canalisation 2 et un emboîtement 3, ou bout femelle, d'un deuxième tuyau de canalisation 4, prêts à être assemblés. Le bout uni 1 et l'emboîtement 3 sont disposés sensiblement coaxialement.

Ces tuyaux peuvent être en particulier des tuyaux successifs d'une canalisation, notamment en fonte ductile, chaque tuyau comportant un bout uni 1 à une extrémité et un emboîtement 3 à une autre extrémité.

Le bout uni 1 possède une surface radialement extérieure cylindrique 5 reliée par une surface convergente 6 à la tranche 7 de l'extrémité avant 8 du bout uni 1.

Intérieurement, l'emboîtement 3 présente successivement une surface d'entrée tronconique convergente 9, une surface cylindrique 10 de guidage du bout uni, une gorge annulaire 11, un bossage annulaire 12 et enfin une chambre d'étanchéité 13 partiellement représentée sur la figure 1.

Une garniture d'étanchéité annulaire 14 à compression radiale, d'axe confondu avec l'axe du tuyau 4 a un talon annulaire 15 de retenue axiale logé dans la gorge 11. Ce talon 15 est prolongé axialement vers l'intérieur de l'emboîtement 3 (à droite sur la figure 1) par un corps d'étanchéité 16 logé dans la chambre 13.

Extérieurement, l'emboîtement 3 présente depuis son entrée, située à son extrémité arrière 17, une collerette 18 en saillie radiale, suivie d'une surface fortement convergente 19 reliée à la surface extérieure courante 20 de l'emboîtement 3.

Une contrebride de verrouillage 21 est fixée grâce à des boulonnages de fixation 22 (dont un seul est représenté sur la figure 1) sur l'emboîtement 3, à l'extrémité arrière 17 de celui-ci.

Cette contrebride 21 comprend une partie sensiblement tronconique 23, disposée coaxialement à l'emboîtement 3 et prolongée radialement vers l'extérieur par un voile 24. Ce voile 24 est terminé par un rebord périphérique 25 s'étendant axialement au-delà de la tranche d'extrémité avant 26 de la contrebride 21. Cette tranche d'extrémité 26 est en appui sur la tranche 27 de l'extrémité arrière 17 de l'emboîtement 3.

Le voile 24 est percé d'orifices 28 régulièrement répartis angulairement, dans lesquels passent librement des vis 29 des boulonnages 22. Ces vis 29 comprennent chacune une extrémité filetée 30 et une extrémité 31 munie d'un talon excentrique 32 prenant appui sur la surface 19 de l'emboîtement 3.

Un écrou 33 est vissé sur l'extrémité 30 de chaque vis 29 et prend appui sur la surface arrière 34 du voile 24.

Les boulonnages 22 assurent ainsi la solidarisation de la contrebride 21 et de l'emboîtement 3.

La partie 23 de la contrebride 21 présente intérieurement une surface de réaction 35 sensiblement sphérique et convergente vers l'extrémité arrière 36 de la contrebride 21.

A l'extrémité avant 26 de la contrebride 21, cette surface 35 a une ouverture radiale sensiblement plus grande que l'ouverture radiale de la surface d'entrée 9 de l'emboîtement 3. La surface 35 délimite intérieurement une chambre de verrouillage 37.

L'extrémité arrière de la partie 23 présente une surface extérieure radiale d'appui 38.

La contrebride 21 est munie d'un dispositif de verrouillage 39 comprenant une couronne de blocage 40 logée en attente dans la chambre de verrouillage 37, et un collier de retenue 41 situé à l'extérieur de la chambre 37 et prenant appui sur la surface 38.

La couronne 40 comprend des inserts de blocage 42 métalliques, régulièrement répartis angulairement et reliés entre eux par une bague de frettage 43 en élastomère.

Ces inserts 42 sont des blocs présentant une section longitudinale sensiblement trapézoïdale avec une petite face arrière ou extérieure sensiblement radiale 44 (figure 2), une grande face avant ou intérieure sensiblement radiale munie d'une gorge transversale, une surface radialement intérieure 45 munie de dents d'accrochage 46, et une surface radialement extérieure qui converge vers l'extrémité arrière 36 de la contrebride 21.

Les faces arrière 44 des inserts 42 sont orientées vers l'extrémité avant 8 du bout uni 3, et vers l'extrémité axialement extérieure de la chambre 37.

La bague 43 comprend un voile radialement extérieur 47 reliant périphériquement les surfaces radialement extérieures des inserts 42. Ce voile 47 est prolongé, vers l'extrémité avant de la contrebride, par une partie sensiblement radiale 48 longeant la face avant de chaque insert 42, cette partie 48 étant munie d'un bossage annulaire en saillie vers l'arrière et logé dans la gorge de la face avant de chaque insert 42.

Le voile 47 est prolongé vers l'arrière par une partie de liaison radiale 49 (figure 2) s'étendant le long de la face 44 de chaque insert 42. Cette partie 49 est prolongée axialement vers l'arrière, et jusqu'à l'extérieur de la chambre 37, par un segment de jonction tronconique 50, évasé vers l'extérieur et terminé par une partie radiale 51 dans laquelle est logé un anneau métallique 52. Cette partie radiale 51 forme le collier de retenue 41.

Les inserts 42 sont destinés, lors de l'introduction du bout uni 1 dans la chambre 37, à se déplacer axialement vers l'avant et à s'écarter radialement vers l'extérieur en déformant la bague 43 de manière à ce que celle-ci vienne se placer autour du bout uni 1. Le collier 41 assure la retenue axiale de la couronne 40 lors de cette introduction, en maintenant ainsi, d'une part le voile 47 au voisinage de la surface de réaction 35, et d'autre part la surface 45 de chaque insert 42 en contact avec la surface radialement extérieure du bout uni 1. Ainsi, après introduction complète du bout uni 1 dans l'emboîtement 3, la couronne 40 est comprimée radialement sur la surface 5. Lorsqu'un effort de déboîtement s'exerce sur le bout uni, sous l'effet de la mise en pression de la canalisation, le voile 47 vient buter contre la surface de réaction 35, et les dents 46 des inserts viennent mordre la surface 5 en empêchant le bout uni 1 de se retirer de l'emboîtement 3.

Comme on peut le voir sur la figure 2, la face 44 de l'insert 42 se termine par un bord radialement intérieur 53 qui est relié à la face radialement intérieure 45 par une zone de jonction chanfreinée 54.

La partie de liaison 49 de la bague 43 se prolonge radialement vers l'intérieur au-delà du bord radialement intérieur 53 de la face 44 de l'insert 42 par un bourrelet d'abordage 55. Ce bourrelet 55 s'étend radialement vers l'intérieur, en porte-à-faux, au-delà du bord 53 sur une distance h.

La surface radialement intérieure 56 du bourrelet 55 est convergente vers l'avant et prolonge la face interne du segment 50.

Lors de l'introduction du bout uni 1 dans la chambre de verrouillage 37, l'extrémité avant 8 du bout uni 3 vient buter contre le bourrelet 55. La surface 56 de ce bourrelet 55 glisse successivement sur les surfaces 6 et 5 du bout uni 3 pendant que le segment de jonction 50 s'écarte et que le bout uni 1 avance progressivement dans la chambre de verrouillage 37.

Grâce à cette caractéristique, la face 44 des inserts ne peut pas buter directement contre l'extrémité avant 8 du bout uni 3, ce qui évite le risque de basculement des inserts 42 évoqué plus haut.

Afin que le bourrelet 55 assure correctement son rôle de butée, notamment lorsque le segment 50 s'écarte, la distance h est supérieure à 0,4 mm et/ou supérieure à 4% de la hauteur radiale moyenne des inserts 42 et/ou supérieure à 3% du déplacement radial moyen de la bague 43 lorsque la couronne 40 vient se placer autour du bout uni 1.

Le bourrelet 55 s'étend radialement vers l'intérieur au-delà du bord arrière 57 de la surface 45 de chaque insert 42.

On conçoit que la couronne 40 du dispositif de verrouillage 39 peut être logée dans une chambre de verrouillage ménagée dans une contrebride, comme représenté sur la figure 1, ou dans une chambre de verrouillage ménagée directement dans l'emboîtement 3, par exemple entre l'entrée de l'emboîtement et la chambre d'étanchéité de celui-ci.

Dans une variante représentée sur la figure 3, le bourrelet d'abordage 55 se prolonge axialement vers l'avant (donc vers l'intérieur du tuyau 4) en recouvrant sensiblement la zone de jonction 54 et une partie de la surface radialement intérieure 45 de l'insert 42.

Dans cette variante, la surface radialement intérieure 56 du bourrelet 55 se prolonge également vers l'avant, au-delà de la zone de jonction 54, et vient recouvrir partiellement la surface radialement intérieure 45 de l'insert 42.

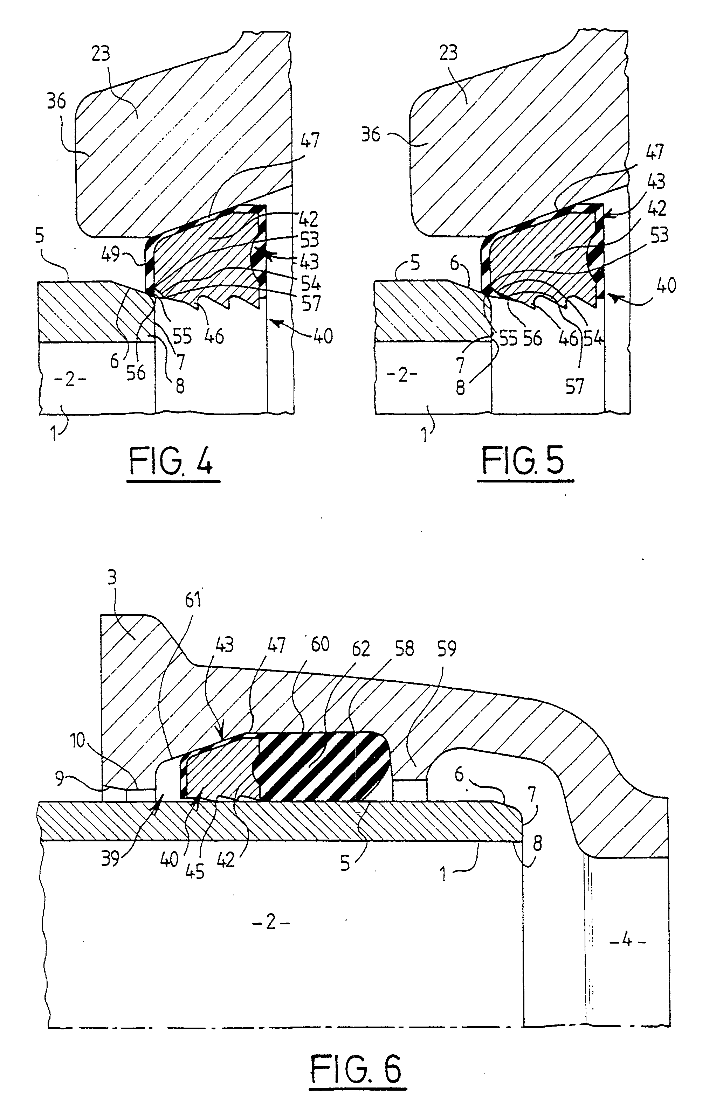

La figure 4 illustre un autre mode de réalisation de l'invention, qui se distingue du premier mode de réalisation en ce que le dispositif de verrouillage ne comprend pas de collier de retenue 41 et donc pas de segment de jonction 50 entre celui-ci et la couronne de blocage 40.

Le comportement habituel d'un tel dispositif se distingue du comportement du dispositif du mode de réalisation précédent par ce qui suit.

Lors de l'introduction du bout uni 1 dans la chambre de verrouillage 37, celui-ci déplace la couronne 40 axialement, la couronne 40 étant alors ramenée élastiquement par des moyens de retenue (non représentés) qui repoussent la couronne 40 axialement vers l'arrière, lesdits moyens de retenue étant disposés entre ladite couronne 40 et la tranche arrière 27 du tuyau sur laquelle ils s'appuient. Ces moyens de retenue assurent alors la retenue axiale de la couronne 40 assurée par le collier 41 dans le mode de réalisation précédent, puis le bout uni s'introduit entre les inserts et écarte la couronne 40 pour la traverser.

Dans ce mode de réalisation, la partie de liaison 49 se prolonge également radialement vers l'intérieur au-delà du bord 53 en un bourrelet d'abordage 55. La surface radialement intérieure 56 du bourrelet d'abordage 55 est également convergente vers l'avant.

Cette caractéristique permet, de manière analogue au mode de réalisation précédent, d'éviter le basculement des inserts 42 quand ils sont soumis à une force de pénétration axiale du bout uni 1 et à la force opposée de retenue.

La figure 5 illustre une variante du mode de réalisation de la figure 4 dans laquelle, d'une manière analogue à la variante de la figure 3, le bourrelet d'abordage 55 s'étend axialement vers l'intérieur en recouvrant la zone de jonction 54 de l'insert 42 et une partie de la surface radialement intérieure 45 de l'insert 42.

La figure 6 illustre un autre mode de réalisation, dans lequel l'emboîtement 3 présente intérieurement, successivement, une surface d'entrée convergente 9, une surface cylindrique de guidage 10, une chambre de verrouillage et d'étanchéité 58 et une collerette intérieure 59. La chambre d'étanchéité 58 présente une surface intérieure sensiblement cylindrique 60 qui se prolonge vers l'arrière par une surface de réaction inclinée 61.

La couronne 40 du dispositif de verrouillage se distingue de la couronne du dispositif de la figure 4 uniquement en ce que la face avant et le voile 47 de la bague 43 sont prolongés vers l'avant par un corps d'étanchéité annulaire 62 à compression radiale, ce corps 62 venant en appui au moins partiellement contre la collerette 59. Cette figure illustre également les positions relatives après assemblage du bout uni 1, de l'emboîtement 3 et du dispositif de verrouillage 39.

Dans ce mode de réalisation, d'une part le corps d'étanchéité 62 coopère avec la surface 5 du bout uni 1 et la surface cylindrique en regard 60 de la chambre 58 pour assurer l'étanchéité de l'assemblage entre les deux tuyaux 2 et 4, et d'autre part la surface 45 de chaque insert 42 coopère avec la surface 5 du bout uni et le voile 47 de la bague 43 coopère avec la surface de réaction 61 de la chambre 58 pour assurer le verrouillage entre les deux tuyaux 2 et 4. Dans ce cas, lors de la pénétration du bout uni, c'est l'élasticité engendrée par la compression axiale du corps 62 contre la collerette 59, qui assure la force de retenue axiale du dispositif de verrouillage 39 permettant l'écartement des inserts 42.

## Revendications

1. Dispositif de verrouillage pour l'assemblage d'un bout uni (1) et d'un emboîtement (3) de deux éléments de canalisation (2, 4), dispositif du type comprenant une couronne de blocage (40) qui comporte au moins un insert de blocage (42) relié à une bague de frettage (43) en élastomère ou analogue, cette couronne (40) étant logée en attente dans une chambre de verrouillage (37 ; 58) solidaire dudit emboîtement avant introduction du bout uni dans cette chambre, une partie de liaison (49) de la bague s'étendant le long d'une surface d'extrémité extérieure (44) de l'insert orientée vers l'extrémité axialement extérieure de la chambre de verrouillage, l'insert (42) étant destiné, lors de l'introduction du bout uni (1) dans la chambre de verrouillage (37 ; 58), à s'écarter radialement vers l'extérieur en déformant la bague (43) de manière que celle-ci vienne se placer autour du bout uni, une surface radialement extérieure de la couronne étant destinée à prendre appui sur une surface de réaction inclinée (35 ; 61) de la chambre de verrouillage et l'insert (42) présentant une surface radialement intérieure (45) dont au moins un relief d'accrochage (46) est destiné à prendre appui sur la surface radialement extérieure (5) du bout uni (1) pour verrouiller l'assemblage des deux éléments de canalisation (2, 4), **caractérisé en ce que** ladite partie de liaison (49) de la bague (43) se prolonge radialement vers l'intérieur par un bourrelet (55). d'abordage de l'extrémité du bout unit, ce bourrelet d'abordage (55) dépassant radialement vers l'intérieur au-delà d'un bord radialement intérieur (53) de ladite surface d'extrémité extérieure (44) de l'insert.

2. Dispositif selon la revendication 1, **caractérisé en ce que** le bourrelet d'abordage (55) dépasse radialement vers l'intérieur du bord radialement intérieur (53) de la surface d'extrémité extérieure (44) de l'insert, d'une distance h qui est supérieure à 0,4 mm.

3. Dispositif selon la revendication 1 ou 2, **caractérisé en ce que** le bourrelet d'abordage (55) dépasse radialement vers l'intérieur du bord radialement intérieur (53) de la surface d'extrémité extérieure (44) de l'insert, d'une distance h qui est supérieure à 4% de la hauteur radiale moyenne de l'insert.

4. Dispositif selon l'une quelconque des revendications 1 à 3, **caractérisé en ce que** le bourrelet d'abordage (55) dépasse radialement vers l'intérieur du bord radialement intérieur (53) de la surface d'extrémité extérieure de l'insert, d'une distance h qui est supérieure à 3% du déplacement radial moyen de la bague lorsqu'elle vient se placer autour du bout uni.

5. Dispositif selon l'une quelconque des revendications 1 à 4, **caractérisé en ce que** ladite surface d'extrémité extérieure (44) de l'insert est reliée à la surface radialement intérieure (45) par une zone de jonction (54) arrondie et/ou chanfreinée.

6. Dispositif selon la revendication 5, **caractérisé en ce que** le bourrelet d'abordage (55) de la bague recouvre au moins partiellement la zone de jonction (54).

7. Dispositif selon l'une quelconque des revendications 1 à 6, **caractérisé en ce que** le bourrelet d'abordage (55) de la bague est prolongé axialement vers l'intérieur le long d'au moins une partie de la surface radialement intérieure (45) de l'insert.

8. Dispositif selon l'une quelconque des revendications 1 à 7, **caractérisé en ce qu'**il comprend une partie de retenue axiale (41) destinée à prendre appui sur une surface d'appui arrière (38) solidaire de l'emboîtement (3), pour limiter les déplacements axiaux de la couronne (40) lors de l'introduction du bout uni (1) dans l'emboîtement (3).

9. Dispositif selon l'une quelconque des revendications 1 à 8, **caractérisé en ce que** la couronne de blocage (40) comprend un corps d'étanchéité (62) à compression radiale pour assurer l'étanchéité entre les deux éléments de canalisation (2, 4) assemblés.

10. Dispositif selon la revendication 9, **caractérisé en ce que** ledit corps d'étanchéité (62) est destiné à venir en appui au moins partiellement contre une collerette radialement intérieure (59) de l'emboîtement (3).

11. Assemblage d'éléments de canalisation, notamment des tuyaux, comprenant un bout uni (1) d'un premier élément de canalisation (2) introduit dans un emboîtement (3) d'un second élément de canalisation (4), le second élément de canalisation (4) comprenant également une chambre de verrouillage (37 ; 58) solidaire de l'emboîtement, ladite chambre étant ménagée dans l'emboîtement ou dans une contrebride (21) fixée sur celui-ci, **caractérisé en ce qu'**il comprend un dispositif de verrouillage selon l'une quelconque des revendications 1 à 10 dont la couronne de blocage (40) est logée dans ladite chambre, une surface radialement extérieure de la couronne prenant appui sur une surface de réaction inclinée (35 ; ; 61) de la chambre de verrouillage, et la surface radialement intérieure (45) de l'insert (42) prenant appui sur la surface radialement extérieure (5) du bout uni (1) en verrouillant l'assemblage des deux éléments de canalisation (2, 4).

12. Assemblage selon la revendication 11, **caractérisé en ce qu'**il comprend une garniture d'étanchéité à compression radiale (14 ; ; 62) interposée entre le bout uni (1) et l'emboîtement (3).

## Patentansprüche

1. Verriegelungsvorrichtung zur Verbindung eines Rohreinsteckendes (1) und einer Einschiebmuffe (3) von zwei Rohrleitungselementen (2, 4), Vorrichtung von der Art, die einen Blockierkranz (40) enthält, der mindestens einen Blockiereinsatz (42) aufweist, der mit einem Mantelring (43) aus Elastomermaterial oder ähnlichem verbunden ist, wobei dieser Kranz (40) in einer fest mit der Einschiebmuffe verbundenen Verriegelungskammer (37; 58) vor dem Einführen des Rohreinsteckendes in diese Kammer in Bereitschaft angeordnet ist, wobei ein Verbindungsbereich (49) des Rings sich entlang einer äußeren Endfläche (44) des Einsatzes erstreckt, die zum axial äußeren Ende der Verriegelungskammer ausgerichtet ist, wobei der Einsatz (42) bei der Einführung des Rohreinsteckendes (1) in die Verriegelungskammer (37; 58) dazu bestimmt ist, sich radial nach außen abzuspreizen, indem er den Ring (43) so verformt, daß dieser sich um das Rohreinsteckende herum anordnet, wobei eine radial äußere Fläche des Kranzes dazu bestimmt ist, auf einer geneigten Reaktionsfläche (35; 61) der Verriegelungskammer aufzuliegen, und der Einsatz (42) eine radial innere Fläche (45) aufweist, von der mindestens ein Befestigungsvorsprung (46) dazu bestimmt ist, sich auf die radial äußere Fläche (5) des Rohreinsteckendes (1) aufzulegen, um die Verbindung der beiden Rohrleitungselemente (2, 4) zu verriegeln, **dadurch gekennzeichnet, daß** der Verbindungsbereich (49) des Rings (43) sich durch einen Aufprallwulst (55) für das Ende des Rohreinsteckendes radial nach innen verlängert, wobei dieser Aufprallwulst (55) über einen radial inneren Rand (53) der äußeren Endfläche (44) des Einsatzes hinaus radial nach innen übersteht.

2. Vorrichtung nach Anspruch 1, **dadurch gekennzeichnet, daß** der Aufprallwulst (55) radial zur Innenseite des radial inneren Rands (53) der äußeren Endfläche (44) des Einsatzes um eine Strecke h übersteht, die größer als 0,4 mm ist.

3. Vorrichtung nach Anspruch 1 oder 2, **dadurch gekennzeichnet, daß** der Aufprallwulst (55) radial zur Innenseite des radial inneren Rands (53) der äußeren Endfläche (44) des Einsatzes um eine Strecke h übersteht, die größer als 4 % der mittleren radialen Höhe des Einsatzes ist.

4. Vorrichtung nach einem der Ansprüche 1 bis 3, **dadurch gekennzeichnet, daß** der Aufprallwulst (55) radial zur Innenseite des radial inneren Rands (53) der äußeren Endfläche des Einsatzes um eine Strecke h übersteht, die größer ist als 3 % der mittleren radialen Verschiebung des Rings, wenn dieser sich um das Rohreinsteckende herum legt.

5. Vorrichtung nach einem der Ansprüche 1 bis 4, **dadurch gekennzeichnet, daß** die äußere Endfläche (44) des Einsatzes mit der radial inneren Fläche (45) über eine abgerundete und/oder abgeschrägte Verbindungszone (54) verbunden ist.

6. Vorrichtung nach Anspruch 5, **dadurch gekennzeichnet, daß** der Aufprallwulst (55) des Rings zumindest teilweise die Verbindungszone (54) überdeckt.

7. Vorrichtung nach einem der Ansprüche 1 bis 6, **dadurch gekennzeichnet, daß** der Aufprallwulst (55) des Rings axial nach innen entlang mindestens eines Teils der radial inneren Fläche (45) des Einsatzes verlängert ist.

8. Vorrichtung nach einem der Ansprüche 1 bis 7, **dadurch gekennzeichnet, daß** sie einen axialen Rückhaltebereich (41) aufweist, der dazu bestimmt ist, auf einer hinteren Auflagefläche (38) aufzuliegen, die fest mit der Einschiebmuffe (3) verbunden ist, um die axialen Verschiebungen des Kranzes (40) beim Einführen des Rohreinsteckendes (1) in die Einschiebmuffe (3) zu begrenzen.

9. Vorrichtung nach einem der Ansprüche 1 bis 8, **dadurch gekennzeichnet, daß** der Blockierkranz (40) einen Dichtkörper (62) mit radialer Komprimierung aufweist, um die Dichtheit zwischen den beiden zusammengesetzten Rohrleitungselementen (2, 4) zu gewährleisten.

10. Vorrichtung nach Anspruch 9, **dadurch gekennzeichnet, daß** der Dichtkörper (62) dazu bestimmt ist, zumindest teilweise gegen einen radial inneren Kragen (59) der Einschiebmuffe (3) in Anlage zu gelangen.

11. Verbindung von Rohrleitungselementen, insbesondere von Rohren, mit einem Rohreinsteckende (1) eines ersten Rohrleitungselements (2), das in eine Einschiebmuffe (3) eines zweiten Rohrleitungselements (4) eingeführt ist, wobei das zweite Rohrleitungselement (4) auch eine Verriegelungskammer (37; 58) aufweist, die fest mit der Einschiebmuffe verbunden ist, wobei die Kammer in der Einschiebmuffe oder in einem auf dieser befestigten Gegenflansch (21) ausgebildet ist, **dadurch gekennzeichnet, daß** sie eine Verriegelungsvorrichtung nach einem der Ansprüche 1 bis 10 aufweist, deren Blokkierkranz (40) in der Kammer angeordnet ist, wobei eine radial äußere Fläche des Kranzes auf einer geneigten Reaktionsfläche (35; 61) der Verriegelungskammer aufliegt, und die radial innere Fläche (45) des Einsatzes (42) auf der radial äußeren Fläche (5) des Rohreinsteckendes (1) aufliegt, indem sie die Verbindung der beiden Rohrleitungselemente (2, 4) verriegelt.

12. Verbindung nach Anspruch 11, **dadurch gekennzeichnet, daß** sie eine Dichtung mit radialer Komprimierung (14; 62) aufweist, die zwischen dem Rohreinsteckende (1) und der Einschiebmuffe (3) angeordnet ist.

## Claims

1. Locking device for the joint between a smooth end (1) and a socket (3) of two pipeline elements (2, 4), of the type comprising a blocking crown (40) which includes at least one blocking insert (42) joined to a binding ring (43) made of elastomer or the like, this crown (40) being lodged in readiness in a locking chamber (37; 58) integral with the said socket before introduction of the smooth end into this chamber, a connecting part (49) of the ring extending along an outer extremity surface (44) of the insert oriented towards the axially outer extremity of the locking chamber, the insert (42) being intended, upon the introduction of the smooth end (1) into the locking chamber (37; 58), to move apart radially outwards, thereby deforming the ring (43) such that the latter is placed around the smooth end, a radially outer surface of the crown being intended to bear on an inclined reaction surface (35; 61) of the locking chamber and the insert (42) having a radially inner surface (45), of which at least one catching relief (46) is intended to bear on the radially outer surface (5) of the smooth end (1) to lock the joint between the two pipeline elements (2, 4), **characterized in that** the said connecting part (49) of the ring (43) is continued radially inwards by a flange (55) for abutment of the extremity of the smooth end, this abutment flange (55) extending radially inwards beyond a radially inner edge (53) of the said outer extremity surface (44) of the insert.

2. Device according to Claim 1, **characterized in that** the abutment flange (55) extends radially inwards beyond the radially inner edge (53) of the outer extremity surface (44) of the insert by a distance h which is greater than 0.4 mm.

3. Device according to Claim 1 or 2, **characterized in that** the abutment flange (55) extends radially inwards beyond the radially inner edge (53) of the outer extremity surface (44) of the insert by a distance h which is greater than 4% of the mean radial height of the insert.

4. Device according, to any one of Claims 1 to 3, **characterized in that** the abutment flange (55) extends radially inwards beyond the radially inner edge (53) of the outer extremity surface of the insert by a distance h which is greater than 3% of the mean radial displacement of the ring when it is placed around the smooth end.

5. Device according to any one of Claims 1 to 4, **characterized in that** the said outer extremity surface (44) of the insert is joined to the radially inner surface (45) by a rounded and/or chamfered junction zone (54).

6. Device according to Claim 5, **characterized in that** the abutment flange (55) of the ring at least partially covers the junction zone (54).

7. Device according to any one of Claims 1 to 6, **characterized in that** the abutment flange (55) of the ring is continued axially inwards along at least a part of the radially inner surface (45) of the insert.

8. Device according to any one of Claims 1 to 7, **characterized in that** it comprises an axial retention part (41) intended to bear on a rear bearing surface (38) integral with the socket (3), to limit the axial displacements of the crown (40) upon the introduction of the smooth end (1) into the socket (3).

9. Device according to any one of Claims 1 to 8, **characterized in that** the blocking crown (40) comprises a radial-compression sealing body (62) to ensure the sealing between the two joined pipeline elements (2, 4).

10. Device according to Claim 9, **characterized in that** the said sealing body (62) is intended to come to bear at least partially against a radially inner collar (59) of the socket (3).

11. Joint between pipeline elements, especially pipes, comprising a smooth end (1) of a first pipeline element (2) introduced into a socket (3) of a second pipeline element (4), the second pipeline element (4) also comprising a locking chamber (37; 58) integral with the socket, the said chamber being formed in the socket or in a counterflange (21) fixed onto the latter, **characterized in that** it comprises a locking device according to any one of Claims 1 to 10 in which the blocking crown (40) is lodged in the said chamber, a radially outer surface of the crown bearing on an inclined reaction surface (35; 61) of the locking chamber, and the radially inner surface (45) of the insert (42) bearing on the radially outer surface (5) of the smooth end (1), thereby locking the joint between the two pipeline elements (2, 4).

12. Joint according to Claim 11, **characterized in that** it comprises a radial-compression packing (14; 62) interposed between the smooth end (1) and the socket (3).
